# EUROPEAN PATENT APPLICATION

(11) **EP 2 902 901 A1**
(43) Date of publication of application: **05.08.2015**
(21) Application number: 13840375.3
(22) Date of filing: 29.08.2013
(51) Int. Cl.: G06F 9/445

(54) **DEVELOPMENT, COMPILING AND DEBUGGING METHOD AND DEVICE FOR APPLICATION**

(30) Priority: 29.09.2012 CN 201210378845
(71) Applicant: ZTE Corporation, Shenzhen, Guangdong 518057 (CN)
(72) Inventor: KUANG, Yufeng, Shenzhen Guangdong 518057 (CN); WEI, Chuanhui, Shenzhen Guangdong 518057 (CN)
(74) Representative: Chimini, Francesco
(86) International application number: PCT/CN2013/082579
(87) International publication number: WO 2014/048215

(57) **Abstract**

Provided are a method and device for developing, compiling and debugging an application. The method includes: acquiring codes, wherein the codes are used for implementing the application and are compatible with one or more terminal operating systems; selecting one or more compiling environments from multiple compiling environments of different terminal operating systems to compile the codes; and debugging the compiled codes in one or more debugging environments corresponding to the one or more compiling environments. The solution provides an integrated cross-platform application development environment for a developer. The developer can compile the application capable of running in different terminal operating systems only by using one set of development environment and developing one set of code which is compatible with one or more terminal operating systems, and can also debug the application in different terminals and simulators, so that an effect of running one set of application code in different terminal environments is achieved, and codes and time for compiling and debugging in different environments are greatly saved. The solution also supports the simultaneous online development, compiling and debugging of multiple developers.

## Description

### Technical Field

The present invention relates to the field of communication, particularly to a method and device for developing, compiling and debugging an application.

### Background

Along with the rapid development of network technologies, functions of the mobile communication network are increasingly enhanced, and terminal applications add rich functions to communication terminals such as a mobile phone. A huge market demand urges online and offline merchants to develop Applications (APP) for wooing users one after another. After many Internet enterprises seize the APP market, many traditional merchants start to enter the APP market. Under the trend and background that the mobile Internet subverts an Internet business model, individual developers, studios and large- and medium-sized outsourcing enterprises have fiercely competed in the APP service outsourcing market.

The rapid increasing of intelligent terminals promotes the explosive growth of application downloading. Data from the mobile analysis institute Flurry shows that the APP market in the first quarter of 2012 in China has a year-on-year growth of 1,126%. The number of activated Android and iOS devices in China market accounts for 24% of the total number in the whole world, exceeding that in American market and jumping to the top in the global list, and China becomes actually the first major mobile phone consumption country. Under the background of explosion of the terminal application market, APP development outsourcing service rapidly forms a new fiercely competitive market.

Along with the rapid development of mobile communication infrastructures such as the 3^{rd}-Generation (3G), the 4^{th}-Generation (4G) and Wireless Fidelity (Wifi) as well as the rapid popularization of intelligent terminals based on iOS, Android, Windows Phone (WP) systems, clients represented by APP are booming, and APP is also becoming a toy in hands of a user as well as a marketing tool of a merchant.

A consumer can get a discount by scanning a two-dimensional code on a tabletop in a restaurant with Wechat, and start Changba to sing a song with a friend when feeling bored. APP is subtly penetrating into each field of life.

Along with the increasing popularization of Android mobile phones and iPhones and the preparation of WP7 for rushing into the smart phone market, the hot degree of the mobile Internet is perpendicularly increasing. The rapid development of the mobile Internet market makes a hot trend of terminal application development, and more and more developers start developing terminal applications.

During the development of terminal applications, applications of different terminal platforms are usually required to be provided for users. In order to develop applications of different terminal platforms, the developers need to set up a development environment for each terminal platform, the codes of each terminal application are required to be developed and maintained on different terminal platforms, and the utilization rate of different test terminal equipment is relatively low, which all cause the increasing of cost. At present, there is no effective solution to the rapid development and debugging of an application adaptable to multiple platforms for different mobile phone systems and numerous mobile phone brands.

### Summary of the Invention

The embodiments of the present invention provide a method and device for developing, compiling and debugging an application, so as to at least solve the problem of absence of an effective solution to the rapid development and debugging of an application adaptable to multiple platforms for different terminal operating systems in a related technology.

According to one aspect of the embodiments of the present invention, a method for developing, compiling and debugging an application is provided, including: acquiring codes, wherein the codes are used for implementing the application and are compatible with one or more terminal operating systems; selecting one or more compiling environments from multiple compiling environments of different terminal operating systems to compile the codes; and debugging the compiled codes in one or more debugging environments corresponding to the one or more compiling environments.

In an example embodiment, acquiring the codes includes: generating a code framework for the application, wherein the code framework is compatible with the one or more terminal operating systems; and acquiring the codes edited according to the code framework.

In an example embodiment, selecting the one or more compiling environments from the multiple compiling environments of different terminal operating systems to compile the codes includes: receiving a first compiling request for compiling the codes; and after performing load balancing on one or more received compiling requests, compiling the codes according to the first compiling request, wherein the one or more compiling requests include the first compiling request.

In an example embodiment, after receiving the first compiling request for compiling the codes, the method further includes: if it is determined that all resources are being used, queuing the one or more received compiling requests.

In an example embodiment, after selecting the one or more compiling environments from the multiple compiling environments of different terminal operating systems to compile the codes, the method further includes: feeding back compiling information and a compiling result.

In an example embodiment, the debugging environments corresponding to the compiling environments include at least one of the followings: debugging environments of different terminal operating systems and debugging environments of multiple real terminals, wherein each terminal operating system provides one or more compiling environments and one or more corresponding debugging environments, and the debugging environments of different terminal operating systems are implemented through simulators.

In an example embodiment, debugging the compiled codes in the one or more debugging environments corresponding to the one or more compiling environments includes: selecting, from the debugging environments of different terminal operating systems, one or more simulator debugging environments corresponding to the one or more compiling environments to debug the compiled codes; and selecting, from the debugging environments of multiple real terminals, one or more real terminal debugging environments corresponding to the one or more compiling environments to debug the compiled codes.

In an example embodiment, selecting, from the debugging environments of different terminal operating systems, the one or more simulator debugging environments corresponding to the one or more compiling environments to debug the compiled codes includes: receiving a first simulator debugging request for debugging the codes; and after performing load balancing on one or more received simulator debugging requests, debugging the codes according to the first simulator debugging request, wherein the one or more simulator debugging requests include the first simulator debugging request.

In an example embodiment, after receiving the first simulator debugging request for debugging the codes, the method further includes: monitoring and collecting statistics on the one or more simulator debugging environments corresponding to the one or more compiling environments.

In an example embodiment, selecting, from the debugging environments of the multiple real terminals, the one or more real terminal debugging environments corresponding to the one or more compiling environments to debug the compiled codes includes: receiving a first terminal debugging request for debugging the codes; and after performing load balancing on one or more received terminal debugging requests, debugging the codes according to the first terminal debugging request, wherein the one or more terminal debugging requests include the first terminal debugging request.

In an example embodiment, after receiving the first terminal debugging request for debugging the codes, the method further includes: monitoring and collecting statistics on the one or more real terminal debugging environments corresponding to the one or more compiling environments.

In an example embodiment, after receiving the first simulator debugging request for debugging the codes, the method further includes: if it is determined according to a current service condition of a simulator resource pool that all simulators are being used, queuing the one or more received simulator debugging requests; and after receiving the first terminal debugging request for debugging the codes, the method further includes: if it is determined that all real terminals are being used, queuing the one or more received terminal debugging requests.

In an example embodiment, after selecting, from the debugging environments of different terminal operating systems, the one or more debugging environments corresponding to the one or more compiling environments to debug the compiled codes, the method further includes: feeding back simulator debugging information and a simulator debugging result; and after selecting, from the debugging environments of the multiple real terminals, the one or more debugging environments corresponding to the one or more compiling environments to debug the compiled codes, the method further includes: feeding back terminal debugging information and a terminal debugging result.

In an example embodiment, the one or more compiling environments are automatically allocated according to a service condition of a resource pool.

According to another aspect of the embodiment of the present invention, a device for developing, compiling and debugging an application is provided, including: an acquisition component, configured to acquire codes, wherein the codes are used for implementing the application and are compatible with one or more terminal operating systems; a compiling component, configured to select one or more compiling environments from multiple compiling environments of different terminal operating systems to compile the codes; and a debugging component, configured to debug the compiled codes in one or more debugging environments corresponding to the one or more compiling environments.

In an example embodiment, the acquisition component includes: a generation unit, configured to generate a code framework for the application, wherein the code framework is compatible with the one or more terminal operating systems; and an acquisition unit, configured to acquire the codes edited according to the code framework.

By the embodiment of the present invention, an integrated cross-platform application development environment is provided for a developer. The developer can compile the application capable of running in different terminal operating systems only by using one set of development environment and developing one set of code which is compatible with one or more terminal operating systems, and can also debug the application in different terminals and simulators, so that an effect of running a set of application code in different terminal environments is achieved, codes and time for compiling and debugging in different environments are greatly saved, and the application capable of running in different terminal operating systems can be rapidly developed to fulfill aims of improving the development efficiency and lowering the research and development cost. In addition, the embodiment of the present invention also supports simultaneous online development, compiling and debugging of multiple developers.

### Brief Description of the Drawings

The drawings are described here to provide further understanding of the present invention, and form a part of the present invention. The schematic embodiments and description of the present invention are adopted to explain the present invention, and do not form improper limits to the present invention.

In the drawings:
Fig. 1 is a flowchart of a method for developing, compiling and debugging an application according to an embodiment of the present invention;
Fig. 2 is a structure diagram of a device for developing, compiling and debugging an application according to an embodiment of the present invention;
Fig. 3 is a structure diagram of a device for developing, compiling and debugging an application according to an embodiment of the present invention;
Fig. 4 is a structure diagram of a system for developing, compiling and debugging an application according to an example embodiment of the present invention; and
Fig. 5 is a flowchart of a method for developing, compiling and debugging an application according to an example embodiment of the present invention.

### Detailed Description of the Embodiments

It is important to note that the embodiments of the present invention and the characteristics in the embodiments can be combined under the condition of no conflicts. The present invention is descried below with reference to the drawings and the embodiments in detail.

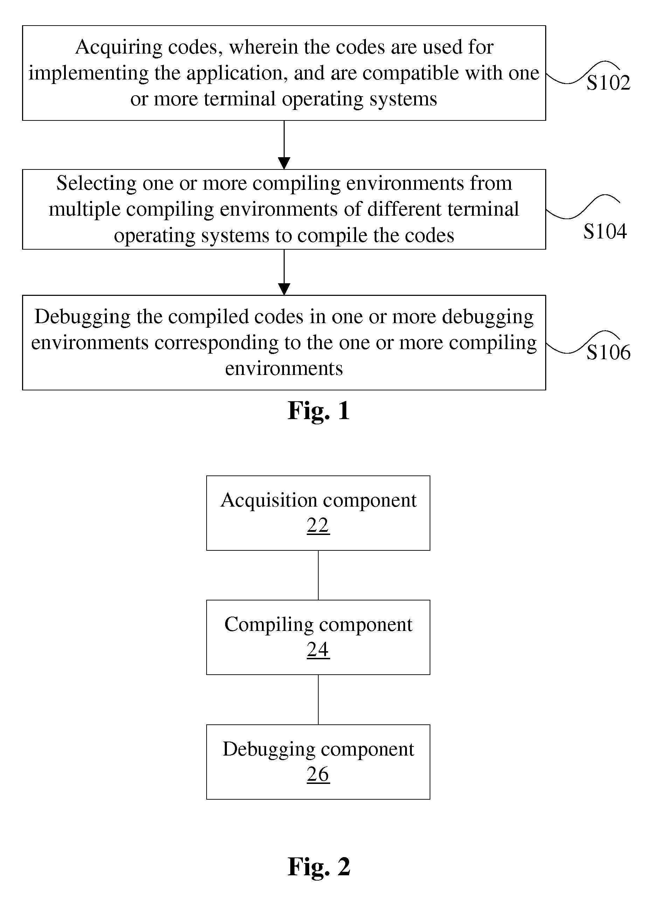

An embodiment of the present invention provides a method for developing, compiling and debugging an application. Fig. 1 is the flowchart of the method for developing, compiling and debugging the application according to the embodiment of the present invention, as shown in Fig. 1, the method includes the following Step 102 to Step 106.

Step 102, codes are acquired, wherein the codes are used for implementing the application and are compatible with one or more terminal operating systems;

Step 104, one or more compiling environments are selected from multiple compiling environments of different terminal operating systems to compile the codes;and

Step 106, the compiled codes are debugged in one or more debugging environments corresponding to the one or more compiling environments.

In a related technology, there is no effective solution yet to the rapid development and debugging of an application adaptable to multiple platforms for different terminal operating systems. In the embodiment of the present invention, a set of integrated cross-platform application development environment is provided for the developer. The developer can compile the application capable of running in different terminal operating systems only by using one set of development environment and developing one set of code which is compatible with the one or more terminal operating systems, and can also debug the application in different terminals and simulators, so that an effect of running a set of application code in different terminal environments is achieved, codes and time for compiling and debugging in different environments are greatly saved, and the application capable of running in different terminal operating systems can be rapidly developed to fulfill aims of improving the development efficiency and lowering the research and development cost. In addition, the embodiment of the present invention also supports the simultaneous online development, compiling and debugging of multiple developers.

It is important to note that selecting multiple compiling environments for compiling the codes in Step 104 refers to the simultaneous compiling of the codes in different compiling environments in the embodiment of the present invention. The compiling environments and the debugging environments thereof are automatically selected in the embodiment, and may be automatically selected through a management unit in a practical application (for example, through cloud management).

In an example embodiment, Step 102 includes: generating a code framework for the application, wherein the code framework is compatible with the one or more terminal operating systems; and acquiring the codes edited according to the code framework. In the example embodiment, the code framework compatible with one or more terminal operating systems is utilized to acquire the codes after edition, and actually is also codes as well as a minimal instance for the running of the application, and the developer can simply and reliably acquire the codes corresponding to the application to be developed by code modification and addition in the code framework.

Compiling and debugging processes of the codes are described below respectively.

### (1)Compiling process

Step 104 includes: receiving a first compiling request for compiling the codes; and after performing load balancing on one or more received compiling requests, compiling the codes according to the first compiling request, wherein the one or more compiling requests include the first compiling request. In the example embodiment, cloud management may be adopted to simultaneously receive multiple compiling requests, therefore, load balancing on the multiple received compiling requests may be required to improve the network capacity. It is important to note that after receiving the first compiling request for compiling the codes, if it is determined that all resources are being used, the one or more received compiling requests are queued.

In an example embodiment, after selecting the one or more compiling environments from the multiple compiling environments of different terminal operating systems to compile the codes, the method further includes: feeding back compiling information and a compiling result. The compiling result is fed back for subsequent debugging.

In an example embodiment, the debugging environments corresponding to the compiling environments include at least one of the followings: debugging environments of different terminal operating systems and debugging environments of multiple real terminals, wherein each terminal operating system provides one or more compiling environments and one or more corresponding debugging environments, and the debugging environments of different terminal operating systems are implemented through simulators.

For the above-mentioned two types of debugging environments, corresponding debugging methods are as follows: selecting, from the debugging environments of different terminal operating systems, one or more simulator debugging environments corresponding to the one or more compiling environments to debug the compiled codes (namely debugging through the simulators); and selecting one or more real terminal debugging environments corresponding to the compiling environments of the one or more terminal operating systems from the debugging environments of multiple real terminals to debug the compiled codes (namely debugging through the terminals).

### (2)Simulator debugging

Selecting, from the debugging environments of different terminal operating systems, the one or more simulator debugging environments corresponding to the one or more compiling environments to debug the compiled codes includes: receiving a first simulator debugging request for debugging the codes; and after performing load balancing on one or more received simulator debugging requests, debugging the codes according to the first simulator debugging request, wherein the one or more simulator debugging requests include the first simulator debugging request. In the example embodiment, under the condition that all services are occupied, the multiple received simulator debugging requests are queued, thereby improving the processing efficiency.

In an example embodiment, after receiving the first simulator debugging request for debugging the codes, the method further includes: monitoring and collecting statistics on the one or more simulator debugging environments corresponding to the one or more compiling environments.

It is important to note that the simulators are automatically allocated according to a service condition of a simulator resource pool, and if all the simulators are being used, the received simulator debugging requests are queued by the following step: after receiving the first simulator debugging request for debugging the codes, if it is determined according to the current service condition of the simulator resource pool that all simulators are being used, queuing the one or more received simulator debugging requests.

In an example embodiment, after selecting, from the debugging environments of different terminal operating systems, the one or more debugging environments corresponding to the one or more compiling environments to debug the compiled codes, the method further includes: feeding back simulator debugging information and a simulator debugging result.

### (3)Terminal debugging

Selecting, from the debugging environments of the multiple real terminals, the one or more real terminal debugging environments corresponding to the one or more compiling environments to debug the compiled codes includes: receiving a first terminal debugging request for debugging the codes; and after performing load balancing on one or more received terminal debugging requests, debugging the codes according to the first terminal debugging request, wherein the one or more terminal debugging requests include the first terminal debugging request.

In an example embodiment, after receiving the first terminal debugging request for debugging the codes, the method further includes: monitoring and collecting statistics on the one or more real terminal debugging environments corresponding to the one or more compiling environments.

After receiving the first terminal debugging request for debugging the codes, the method further includes: if it is determined that all real terminals are being used, queuing the one or more received terminal debugging requests.

In an example embodiment, after selecting, from the debugging environments of the multiple real terminals, the one or more debugging environments corresponding to the one or more compiling environments to debug the compiled codes, the method further includes: feeding back terminal debugging information and a terminal debugging result.

In an example embodiment, the one or more selected compiling environments are automatically allocated according to the service condition of the resource pool.

It is important to note that the above-mentioned simulator debugging and real terminal debugging may be implemented in no particular order, and do not have to coexist, for example, real terminal debugging may be implemented only, or may be implemented after simulator debugging. In the embodiment, the real terminal debugging refers to the installation of the compiled and packaged application in a specific terminal. When the real terminal debugging is implemented after the simulator debugging, the compiled and debugged application is debugged again in the real terminal.

An embodiment of the present invention also provides a device for developing, compiling and debugging an application, and the device may be used to implement the method for developing, compiling and debugging the application. Fig. 2 is the structure diagram of the device for developing, compiling and debugging the application according to the embodiment of the present invention, as shown in Fig. 2, the device including an acquisition component 22, a compiling component 24 and a debugging component 26.

The acquisition component 22 is configured to acquire codes, wherein the codes are used for implementing the application and are compatible with one or more terminal operating systems; the compiling component 24 is coupled with the acquisition component 22, and is configured to select one or more compiling environments from multiple compiling environments of different terminal operating systems to compile the codes acquired by the acquisition component 22; and the debugging component 26 is coupled with the compiling component 24, and is configured to debug the codes compiled by the compiling component 24 in one or more debugging environments corresponding to the one or more compiling environments.

In an example embodiment, the acquisition component 22 includes: a generation unit, configured to generate a code framework for the application, wherein the code framework is compatible with the one or more terminal operating systems; and an acquisition unit, coupled with the generation unit and configured to acquire the codes edited according to the code framework.

The compiling component 24 includes: a receiving unit, configured to receive a first compiling request for compiling the codes; and a compiling unit, coupled with the receiving unit and configured to, after performing load balancing on one or more received compiling requests, compile the codes according to the first compiling request, wherein the one or more compiling requests include the first compiling request.

In an example embodiment, the compiling unit 24 further includes: a queuing unit, coupled with the receiving unit and configured to, under the condition that it is determined that all resources are being used, queue the one or more received compiling requests.

In an example embodiment, the device further includes: a feedback component, coupled with the compiling component 24 and configured to feed back compiling information and a compiling result.

In an example embodiment, the debugging environments corresponding to the compiling environments include at least one of the followings: debugging environments of different terminal operating systems and debugging environments of multiple real terminals, wherein each terminal operating system provides one or more compiling environments and one or more corresponding debugging environments, and the debugging environments of different terminal operating systems are implemented through simulators.

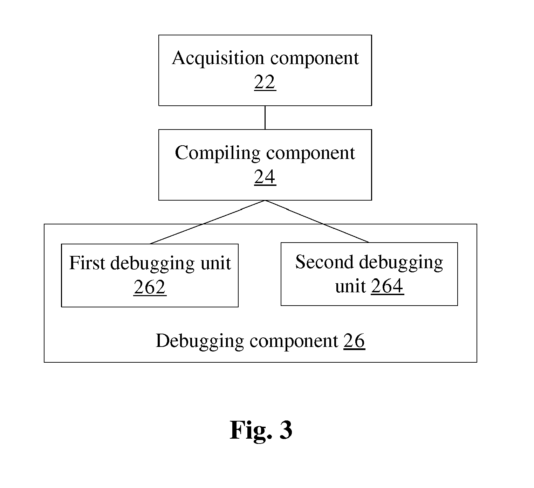

As shown in Fig. 3, the debugging component 26 includes: a first debugging unit 262, configured to select, from the debugging environments of different terminal operating systems, the one or more debugging environments corresponding to the one or more compiling environments to debug the compiled codes; and a second debugging unit 264, configured to select, from the debugging environments of the multiple real terminals, the one or more debugging environments corresponding to the one or more compiling environments to debug the compiled codes.

The first debugging unit 262 includes: a first receiving subunit, configured to receive a first simulator debugging request for debugging the codes; and a first debugging subunit, configured to, after performing load balancing on one or more received simulator debugging requests, debug the codes according to the first simulator debugging request, wherein the one or more simulator debugging requests include the first simulator debugging request. In an example embodiment, the debugging component 26 further includes: a first feedback unit, coupled with the first debugging unit 262 and configured to feed back simulator debugging information and a simulator debugging result.

The first debugging unit 262 further includes: a first monitoring and counting subunit, coupled with the first receiving subunit and configured to, after the first simulator debugging request for debugging the codes is received, monitor and collect statistics on the one or more simulator debugging environments corresponding to the one or more compiling environments.

The first debugging unit 262 further includes: a first queuing subunit, coupled with the first receiving subunit and configured to, under the condition that it is determined that all simulators are being used according to a current service condition of a simulator resource pool, queue the one or more received simulator debugging requests.

The second debugging unit 264 includes: a second receiving subunit, configured to receive a first terminal debugging request for debugging the codes; and a second debugging subunit, configured to, after performing load balancing on one or more received terminal debugging requests, debug the codes according to the first terminal debugging request, wherein the one or more terminal debugging requests include the first terminal debugging request. In an example embodiment, the debugging component 26 further includes: a second feedback unit, coupled with the second debugging unit 264 and configured to feed back terminal debugging information and a terminal debugging result.

The second debugging unit 264 further includes: a second monitoring and counting subunit, coupled with the second receiving subunit and configured to monitor and collect statistics on the one or more real terminal debugging environments corresponding to the one or more compiling environments.

The second debugging unit 264 further includes: a second queuing subunit, coupled with the second receiving subunit and configured to, under the condition that it is determined that all the real terminals are being used, queue the one or more received terminal debugging requests.

It is important to note that the device for developing, compiling and debugging the application described in the device embodiment corresponds to the method embodiment, and its specific implementation process has been described in the method embodiment in detail, and is not required to be repeated here.

In order to make the technical scheme of the embodiment of the present invention and the implementation method clearer, the implementation process is described below with reference to the example embodiment in detail.

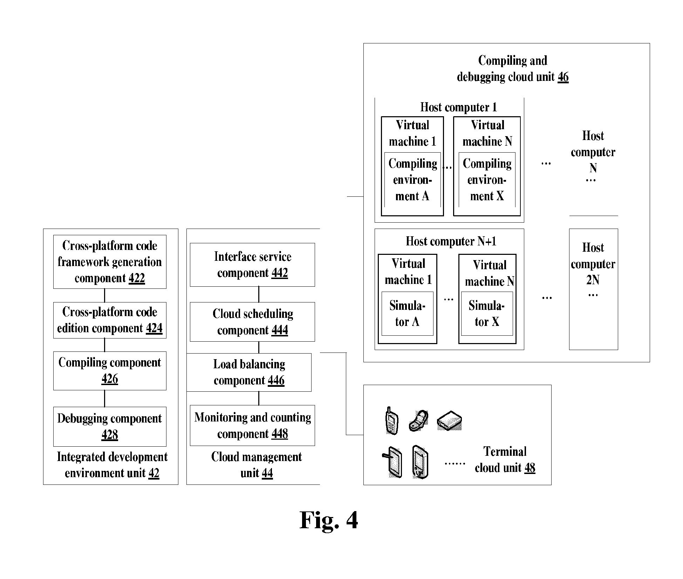

In one example embodiment, a system for developing, compiling and debugging an application is provided. Fig. 4 is the structure diagram of the system for developing, compiling and debugging the application according to the example embodiment of the present invention, as shown in Fig. 4, the system including: an integrated development environment unit 42, a cloud management unit 44, a compiling and debugging cloud unit 46 and a terminal cloud unit 48. Each unit is described below.

The integrated development environment unit 42 includes: a cross-platform code framework generation component 422, a cross-platform code edition component 424, a compiling component 426 and a debugging component 428. The integrated development environment unit 42 provides a developer interaction interface, generates a code framework for the terminal application through the cross-platform code framework generation component 422, simultaneously supports the edition of a code file through the cross-platform code edition component 424, and initiates a request to the cloud management unit 44 through the compiling component 426 and the debugging component 428. The cross-platform code framework generation component 422 is connected with the cross-platform code edition component 424, the compiling component 426 and the debugging component 428, and is configured into a compile and running debug request state.

The cloud management unit 44 receives and responds to a compiling and debugging request of the integrated development environment unit 42, provides compiling, scheduling of a simulator cloud (virtual machine) environment and a terminal cloud, calling and returning of a compiling interface, transmission of a debugging command and feedback of a result, transmits the compiling and debugging request and information to the compiling and debugging cloud unit 46, and transmits a terminal test request and information to the terminal cloud unit 48. The cloud management unit 44 includes: an interface service component 442, a cloud scheduling component 444, a load balancing component 446 and a monitoring and counting component 448. In the embodiment, the interface service component 442 is connected with the load balancing component 446 and the cloud scheduling component 444, and is configured to initiate a cloud compiling or terminal debugging request and result feedback, and simultaneously extends bandwidths of network equipment and a server, increases the throughput, enhances the network data processing capacity and improves the flexibility and availability of a network through the load balancing component 446. The interface service component 442 is connected with the monitoring and counting component 448 for real-time monitoring.

The compiling and debugging cloud unit 46 (realizing functions of the compiling component 24 and the first debugging unit 262) includes compiling environments 462 and simulators 464, namely including compiling environments and debugging environments of different terminal operating systems, each terminal operating system provides 1 to N compiling environments, each terminal provides 1 to N simulators, a virtual machine scheme is adopted, and multiple virtual machines are installed on the same host computer. By the cloud management unit 46, the capacity of hardware can be maximally utilized, multiple applications can be simultaneously compiled and debugged, and after the code compiling and debugging request is received from the cloud management unit 46, the compiling and debugging of the terminal application are initiated, and the result is fed back to the cloud management unit 46. In the embodiment, the compiling environments 462 are connected with the simulators 464, and can compile the codes, and the simulators 464 can debug the codes.

The terminal cloud unit 48 (realizing a function of the second debugging unit 264) provides multiple pieces of equipment, namely providing debugging environments of multiple real terminals, scheduling and calling of the terminals and returning of a response condition to the cloud management unit 44 for scheduling and calling after screens receive a terminal debugging request of the cloud management unit 44.

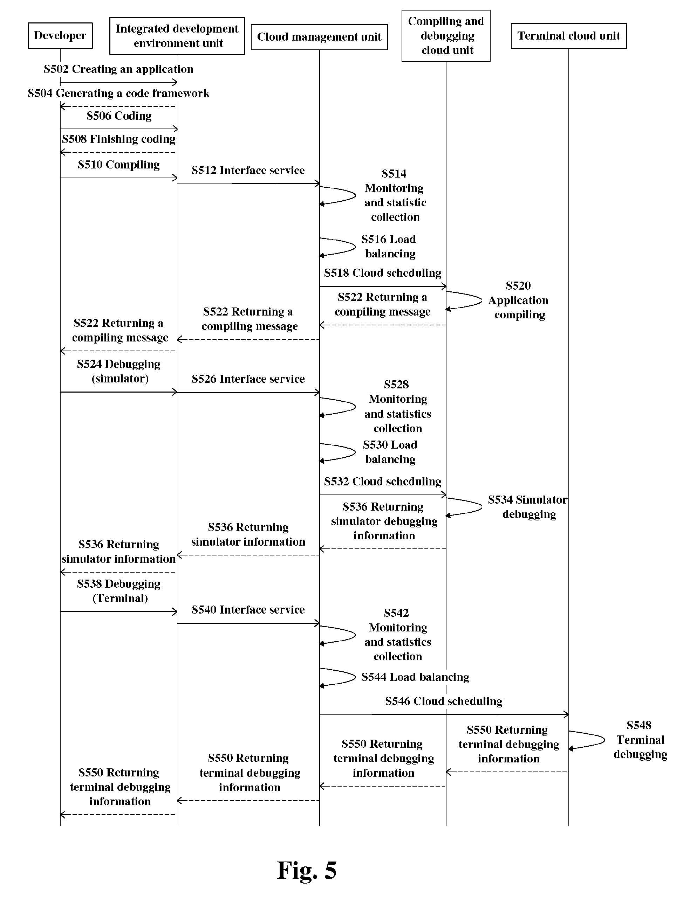

Fig. 5 is the flowchart of the method for developing, compiling and debugging the application according to the example embodiment of the present invention, as shown in Fig. 5, the method for developing, compiling and debugging the application based on the system specifically including:
Step 502, creating, by the developer, the application, selecting an application template, transmitting a message to the cross-platform code framework generation component 422 in the integrated development environment unit 42, and generating, by the cross-platform code framework generation component 422, a cross-platform code framework;
Step 504, displaying the cross-platform code framework to the developer after the cross-platform code framework is generated in the integrated development environment unit 42;
Step 506, editing and designing, by the cross-platform code framework edition component 424, a cross-platform code;
Step 508, finishing the edition and design of the cross-platform code, and successfully storing the cross-platform code;
Step 510, calling the compiling component 426 to initiate compiling request information, and transmitting the request information to the cloud management unit 44;
Step 512, receiving, by the interface service component 442 in the cloud management unit 44, the compiling request information from the integrated development environment unit 42;
Step 514, transmitting and receiving, by the interface service component 442, the information to trigger the monitoring and counting component 448 for information monitoring and counting;
Step 516, transmitting the information into the load balancing component 446 to improve the network capacity;
Step 514 and Step 516 can be executed in no particular order, namely Step 516 can be executed after Step 512, and load balancing is example during access to the cloud management unit 44.
Step 518, sequentially transmitting the information into the load balancing component 446 and the cloud debugging component 444, and calling the compiling and debugging cloud unit 46;
Step 520, calling, by the compiling request, the compiling environments 462 on the compiling and debugging cloud unit 46 for compiling;
Step 522, feeding back, by the interface service component 442 of the cloud management unit 44, compiling information and a compiling result to the integrated development environment unit 42, and displaying the compiling information and the compiling result to the developer;
Step 524, under a successful compiling condition, calling, by the developer, the debugging component 428 to initiate a simulator debugging request, and transmitting the request to the cloud management unit 44;
Step 526, receiving, by the interface service component 442 in the cloud management unit 44, the debugging request information from the integrated development environment unit 42;
Step 528, transmitting and receiving, by the interface service component 442, the information to trigger the monitoring and counting component 448 for information monitoring and counting;
Step 530, transmitting the information into the load balancing component 446 to improve the network capacity;
Step 528 and Step 530 can be executed in no particular order, namely Step 530 can be executed after Step 526, and load balancing is example during access to the cloud management unit 44.
Step 532, sequentially transmitting the information into the load balancing component 446 and the cloud debugging component 444, and calling the compiling and debugging cloud unit 46;
Step 534, calling, by the debugging request, the simulators 464 on the compiling and debugging cloud unit 46 for compiling;
Step 536, feeding back, by the interface service component 442 of the cloud management unit 44, compiling information and a compiling result to the integrated development environment unit 42, and displaying the compiling information and the compiling result to the developer;
Step 538, under a successful compiling condition, calling, by the developer, the debugging component 428 to initiate a terminal debugging request, and transmitting the request to the cloud management unit 44;
it is important to note that Step 538 and Step 524 can be executed in no particular order, namely simulator debugging can be implemented after terminal debugging.
Step 540, receiving, by the interface service component 442 in the cloud management unit 44, the debugging request information from the integrated development environment unit 42;
Step 542, transmitting and receiving, by the interface service component 442, the information to trigger the monitoring and counting component 448 for information monitoring and counting;
Step 544, transmitting the information into the load balancing component 446 to improve the network capacity;
Step 542 and Step 544 can be executed in no particular order, namely Step 544 can be executed after Step 540, and load balancing is example during access to the cloud management unit 44.
Step 546, sequentially transmitting the information into the load balancing component 446 and the cloud debugging component 444, and calling the compiling and debugging cloud unit 46;
Step 548, calling, by the debugging request, the terminal equipment on the terminal cloud unit 48 for compiling; and
Step 550, feeding back, by the interface service component 442 of the cloud management unit 44, compiling information and a compiling result to the integrated development environment unit 42, and displaying the compiling information and the compiling result to the developer.

It is important to note that the steps shown in the flowcharts in the drawings can be executed in a computer system, for example, a group of computers, capable of executing an instruction, and moreover, although a logic sequence is shown in the flowcharts, the shown or described steps can be executed in a sequence different from the logic sequence under a certain condition.

From the above, the method and device for developing, compiling and debugging the application are provided according to the embodiment of the present invention. By the embodiment of the present invention, a set of integrated cross-platform application development environment is provided for the developer, and the developer can compile the application capable of running in different terminal operating systems only by using one set of development environment and developing one set of code which is compatible with the one or more terminal operating systems, and can also debug the application in different terminals and simulators, so that an effect of running a set of application code in different terminal environments is achieved, codes and time for compiling and debugging in different environments are greatly saved, and the application capable of running in different terminal operating systems can be rapidly developed to fulfill aims of improving the development efficiency and lowering the research and development cost. In addition, the embodiment of the present invention also supports the simultaneous online development, compiling and debugging of multiple developers.

Obviously, a technician of the field should know that each component or step of the embodiment of the present invention can be implemented by a universal computing device, and the components or steps can be concentrated on a single computing device or distributed on a network formed by a plurality of computing devices, and can optionally be implemented by programmable codes executable for the computing devices, so that the components or steps can be stored in a storage device for execution with the computing devices, or can form each integrated circuit component, or multiple components or steps therein can form a single integrated circuit component for implementation. As a consequence, the present invention is not limited to any specific hardware and software combination.

The above is only the example embodiment of the present invention and not intended to limit the present invention, and for the technician of the field, the present invention can have various modifications and variations. Any modifications, equivalent replacements, improvements and the like within the spirit and principle of the present invention shall fall within the scope of protection of the present invention.

### Industrial Applicability

The technical scheme of the embodiment of the present invention can be applied to the field of APP, a set of integrated cross-platform application development environment is provided for the developer, and the developer can compile an application capable of running in different terminal operating systems only by using one set of development environment and developing one set of code which are compatible with one or more terminal operating systems, and can also debug the application in different terminals and simulators, so that an effect of running a set of application code in different terminal environments is achieved, codes and time for compiling and debugging in different environments are greatly saved, and the application capable of running in different terminal operating systems can be rapidly developed to fulfill aims of improving the development efficiency and lowering the research and development cost. The embodiment of the present invention also supports the simultaneous online development, compiling and debugging of multiple developers.

## Claims

1. A method for developing, compiling and debugging an application, **characterized by** comprising:
acquiring codes, wherein the codes are used for implementing the application and are compatible with one or more terminal operating systems;
selecting one or more compiling environments from multiple compiling environments of different terminal operating systems to compile the codes; and
debugging the compiled codes in one or more debugging environments corresponding to the one or more compiling environments.

2. The method according to claim 1, **characterized in that** acquiring the codes comprises:
generating a code framework for the application, wherein the code framework is compatible with one or more terminal operating systems; and
acquiring the codes edited according to the code framework.

3. The method according to claim 1, **characterized in that** selecting the one or more compiling environments from the multiple compiling environments of different terminal operating systems to compile the codes comprises:
receiving a first compiling request for compiling the codes; and
after performing load balancing on one or more received compiling requests, compiling the codes according to the first compiling request, wherein the one or more compiling requests comprise the first compiling request.

4. The method according to claim 3, **characterized in that** after receiving the first compiling request for compiling the codes, the method further comprises: if it is determined that all resources are being used, queuing the one or more received compiling requests.

5. The method according to claim 1, **characterized in that** after selecting the one or more compiling environments from the multiple compiling environments of different terminal operating systems to compile the codes, the method further comprises: feeding back compiling information and a compiling result.

6. The method according to claim 1, **characterized in that** the debugging environments corresponding to the compiling environments comprise at least one of the followings: debugging environments of different terminal operating systems and debugging environments of multiple real terminals, wherein each terminal operating system provides one or more compiling environments and one or more corresponding debugging environments, and the debugging environments of different terminal operating systems are implemented through simulators.

7. The method according to claim 6, **characterized in that** debugging the compiled codes in the one or more debugging environments corresponding to the one or more compiling environments comprises at least one of the following steps:
selecting, from the debugging environments of different terminal operating systems, one or more simulator debugging environments corresponding to the one or more compiling environments to debug the compiled codes; and
selecting, from the debugging environments of multiple real terminals, one or more real terminal debugging environments corresponding to the one or more compiling environments to debug the compiled codes.

8. The method according to claim 7, **characterized in that** selecting, from the debugging environments of different terminal operating systems, the one or more simulator debugging environments corresponding to the one or more compiling environments to debug the compiled codes comprises:
receiving a first simulator debugging request for debugging the codes; and
after performing load balancing on one or more received simulator debugging requests, debugging the codes according to the first simulator debugging request, wherein the one or more simulator debugging requests comprise the first simulator debugging request.

9. The method according to claim 8, **characterized in that** after receiving the first simulator debugging request for debugging the codes, the method further comprises:
monitoring and collecting statistics on the one or more simulator debugging environments corresponding to the one or more compiling environments.

10. The method according to claim 7, **characterized in that** selecting, from the debugging environments of the multiple real terminals, the one or more real terminal debugging environments corresponding to the one or more compiling environments to debug the compiled codes comprises:
receiving a first terminal debugging request for debugging the codes; and
after performing load balancing on one or more received terminal debugging requests, debugging the codes according to the first terminal debugging request, wherein the one or more terminal debugging requests comprise the first terminal debugging request.

11. The method according to claim 10, **characterized in that** after receiving the first terminal debugging request for debugging the codes, the method further comprises:
monitoring and collecting statistics on the one or more real terminal debugging environments corresponding to the one or more compiling environments.

12. The method according to claim 8 or 10, **characterized in that** after receiving the first simulator debugging request for debugging the codes, the method further comprises: if it is determined according to a current service condition of a simulator resource pool that all simulators are being used, queuing the one or more received simulator debugging requests; and
after receiving the first terminal debugging request for debugging the codes, the method further comprises: if it is determined that all real terminals are being used, queuing the one or more received terminal debugging requests.

13. The method according to claim 7, **characterized in that** after selecting, from the debugging environments of different terminal operating systems, the one or more debugging environments corresponding to the one or more compiling environments to debug the compiled codes, the method further comprises: feeding back simulator debugging information and a simulator debugging result; and
after selecting, from the debugging environments of the multiple real terminals, the one or more debugging environments corresponding to the one or more compiling environments to debug the compiled codes, the method further comprises: feeding back terminal debugging information and a terminal debugging result.

14. The method according to any one of claims 1 to 13, **characterized in that** the one or more compiling environments are automatically allocated according to a service condition of a resource pool.

15. A device for developing, compiling and debugging an application, **characterized by** comprising:
an acquisition component, configured to acquire codes, wherein the codes are used for implementing the application and are compatible with one or more terminal operating systems;
a compiling component, configured to select one or more compiling environments from multiple compiling environments of different terminal operating systems to compile the codes; and
a debugging component, configured to debug the compiled codes in one or more debugging environments corresponding to the one or more compiling environments.

16. The device according to claim 15, **characterized in that** the acquisition component comprises:
a generation unit, configured to generate a code framework for the application, wherein the code framework is compatible with the one or more terminal operating systems; and
an acquisition unit, configured to acquire the codes edited according to the code framework.
